# EUROPÄISCHE PATENTSCHRIFT

(11) **EP 0 615 075 B1**
(45) Veröffentlichungstag und Bekanntmachung des Hinweises auf die Patenterteilung: **03.05.1995**
(21) Anmeldenummer: 94102577.7
(22) Anmeldetag: 21.02.1994
(51) Int. Cl.: F16F 15/12

(54) **Drehschwingungstilger, insbesondere für den Antriebsstrang von Kraftfahrzeugen**
Rotational vibration damper, particularly for a driveline of a motor vehicle
Amortisseur d'oscillations rotatives en particulier pour le train d'entraînement d'un véhicule à moteur

(30) Priorität: 10.03.1993 DE 4307583
(43) Veröffentlichungstag der Anmeldung: 14.09.1994
(73) Patentinhaber: SGF SÜDDEUTSCHE GELENKSCHEIBENFABRIK GMBH & CO. KG., D-84465 Waldkraiburg (DE)
(72) Erfinder: Fleischmann, Ortwin, D-8261 Kraiburg (DE); Zimmermann, Dirk, D-8261 Ampfing (DE)
(74) Vertreter: Goetz, Rupert, Dipl.-Ing.

(56) Entgegenhaltungen:
- DE-A- 3 534 519
- DE-A- 3 621 143
- DE-A- 3 902 768
- DE-A- 3 902 769
- DE-C- 3 334 393
- DE-C- 3 336 174
- DE-C- 3 534 519
- DE-U- 8 902 637
- FR-A- 2 604 764
- GB-A- 2 180 034
- Dubbel Taschenbuch für den Maschinenbau, 17. Aufl. Seiten T28, T32 und G31

## Beschreibung

Die Erfindung betrifft einen Drehschwingungstilger nach dem Oberbegriff des Patentanspruchs 1.

Ein Drehschwingungstilger dieser Gattung ist aus der DE 35 34 519 C2 bekannt. Er hat einen ringförmigen Tragkörper mit einem radial nach innen ragenden Flansch zur Befestigung an einer Welle, deren Drehschwingungungen gedämpft werden sollen, und mit einer zylindrischen äußeren Mantelfläche. Rings um diese, und gleichachsig mit ihr, ist ein Schwungring mit einer inneren Mantelfläche angeordnet. Tragkörper und Schwungring sind durch mehrere Segmente aus Gummi miteinander verbunden, die in gleichmäßigen Umfangsabständen zwischen den beiden Mantelflächen angeordnet und an diese anvulkanisiert sind. Die Segmente sind in radialer und in Umfangsrichtung elastisch nachgiebig. Um Radialauslenkungen des Schwungrings, die Unwuchten erzeugen wurden, zu vermeiden, und um Radialschwingungen gezielt beeinflussen zu können, sind in von den Segmenten freigelassenen Zwischenräumen zwischen den beiden Mantelflächen formstabile, platten- oder quaderförmige Gleitkörper, beispielsweise aus PTFE, angeordnet, die in einer Ausführungsform in je eine an die äußere Mantelfläche des Tragkörpers anvulkanisierte Halterung aus Gummi axial eingeschoben sind und sich an der inneren Mantelfläche des Schwungrings gleitend abstützen. Die Gleitkörper können je einen radialen Vorsprung aufweisen, der sich in eine entsprechende Vertiefung der zugehörigen Halterung erstreckt und verhindert, daß der Gleitkörper axial aus seiner Halterung herausrutscht. Durch diese Abschnitte unterschiedlicher radialer Dicke sind die Gleitkörper gegenüber dem Tragkörper formschlüssig und zugleich elastisch fixiert. Die Halterungen bilden zwischen den Gleitkörpern und dem Tragkörper eine verhältnismäßig dünne Gummischicht, deren Dicke nicht mehr als 5% des radialen Abstandes zwischen Tragkörper und Schwungring betragen soll. Die Gleitkörper können so bemessen sein, daß bei ihrem axialen Einpressen in die zugehörige Halterung eine radiale Vorspannung entsteht. Bei gegebener Bemessung der Gleitkörper und der sie aufnehmenden Halterungen aus Gummi ist die radiale Vorspannung abhängig von der radialen Dicke der zwischen Gleitkörper und Tragkörper angeordneten Gummischicht, die - wie alle Gummiteile - beim Vulkanisieren um einen von der Gummimischung und anderen Faktoren abhängigen Prozentsatz schwindet, so daß es schwierig ist, eine als wünschenswert erkannte Größe der radialen Vorspannung einzuhalten. Eine zu hohe radiale Vorspannung hat zur Folge, daß an den Gleitflächen der Gleitkörper erhöhter Verschleiß auftritt, daß eine gewünschte Torsionseigenfrequenz des Drehschwingungstilgers nicht genau genug eingehalten werden kann und daß das akustische Verhalten des Drehschwingungstilgers schlecht ist. Bei geringer radialer Vorspannung lassen sich diese Nachteile zwar vermindern, doch kann dann am Schwungring des bekannten Drehschwingungstilgers eine unzulässige Unwucht auftreten.

Der Erfindung liegt deshalb die Aufgabe zugrunde, einen Drehschwingungstilger, bei dem Gleitkörper in gummielastischen Halterungen zwischen einem Tragkörper und einem Schwungring angeordnet sind, derart weiterzubilden, daß die Vorteile einer Abstützung mit hoher Radialsteifigkeit und diejenigen einer Abstützung mit geringer Radialsteifigkeit miteinander kombiniert werden.

Diese Aufgabe ist mit den Merkmalen des Patentanspruchs 1 gelöst.

Mit der erfindungsgemäßen Gestaltung und Anordnung der Gleitkörper wird eine zweistufige radiale Abstützung des Schwungringes am Tragkörper erzielt. Die erste Stufe bietet den Vorteil, daß im gesamten torsionalen Wirkbereich des Tilgers durch die geringe Radialkraft eine geringe Normalkraft auf die Gleitflächen wirkt und somit die Reibung sehr gering gehalten werden kann. Dadurch tritt nahezu kein Verschleiß an den Gleitflächen auf und die torsionale Eigenfrequenz ist sehr stabil. Außerdem ist das akustische Verhalten bei Radialschwingungen sehr gut, ebenso die Möglichkeit, den Tilger genau definiert auf eine Radialeigenfrequenz einzustellen. Die zweite Stufe, die nach Überwindung des radialen Zwischenraumes zum Einsatz kommt, erhöht die Radialsteifigkeit der Gesamtabstützung, um ein Auswandern des Schwungringes bei höheren Drehzahlen, und somit eine Umwuchterhöhung, zu unterbinden.

Vorteilhafte Weiterbildungen der Erfindung ergeben sich aus den Unteransprüchen.

Ausführungsbeispiele der Erfindung werden im folgenden anhand schematischer Zeichnungen mit weiteren Einzelheiten erläutert. Es zeigen:
- Fig. 1: einen erfindungsgemäßen Drehschwingungstilger in Richtung seiner Achse betrachtet,
- Fig. 2: den Teilschnitt II - II in Fig. 1, vergrößert,
- Fig. 3: den Teilschnitt III- III in Fig. 2, in einem Zustand mäßiger radialer Belastung
- Fig. 4: ein Einzelteil aus Fig. 1, ebenfalls in axialer Richtung betrachtet, jedoch in größerem Maßstab,
- Fig. 5: dasselbe Einzelteil in Richtung des Pfeils V in Fig. 4 betrachtet,
- Fig. 6: eine der Fig. 3 ähnliche Ansicht einer abgewandelten Ausführungsform, in einem Zustand mäßiger radialer Belastung,
- Fig. 7: eine der Fig. 6 entsprechende Teilansicht bei stärkerer radialer Belastung,
- Fig. 8: ein Einzelteil aus Fig. 6 in axialer Ansicht,
- Fig. 9: die Ansicht in Richtung des Pfeils IX in Fig. 8 und
- Fig. 10: einen der Fig. 3 ähnlichen Schnitt einer weiteren Ausführungsform, bei mäßiger radialer Belastung.

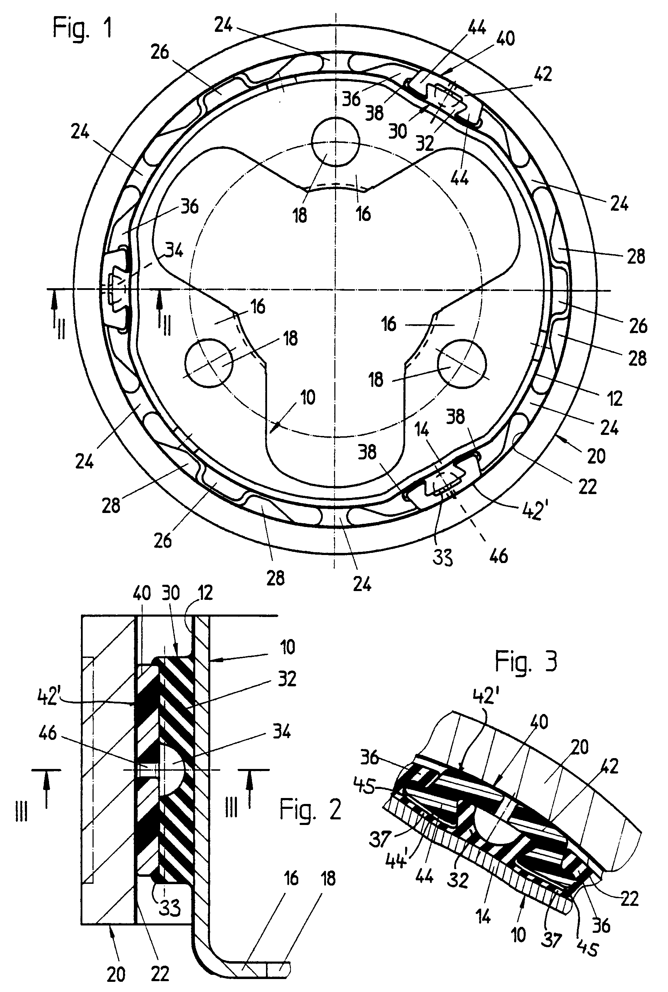

Der in Fig. 1 bis 5 dargestellte Drehschwingungstilger hat einen aus Stahlblech gepreßten Tragkörper 10 mit einer äußeren Mantelfläche 12, die drei um 120° in Umfangsrichtung gegeneinander versetzte Einbuchtungen 14 aufweist und im übrigen kreiszylindrisch ist. Zum Tragkörper 10 gehören ferner drei radial nach innen ragende Flanschabschnitte 16 mit je einem Loch 18 zur Befestigung an einer Welle, deren Torsionsschwingungen gedämpft werden sollen.

Rings um den Tragkörper 10 ist ein Schwungring 20 aus Stahl angeordnet, der eine kreiszylindrische innere Mantelfläche 22 aufweist und durch sechs elastische Segmente 24 mit dem Tragkörper 10 verbunden ist. Die Segmente 24 bestehen aus Gummi und sind an die beiden Mantelflächen 12 und 22 anvulkanisiert. An die äußere Mantelfläche 12 des Tragkörpers 10 sind ferner drei um 120° gegeneinander versetzte radiale Vorsprünge 26 aus Gummi anvulkanisiert, die gegenüber der inneren Mantelfläche 22 des Schwungrings 20 radiales Spiel haben und mit Spiel in Umfangsrichtung zwischen je zwei an die innere Mantelfläche 22 anvulkanisierten Anschlägen 28 aus Gummi angeordnet sind. Die radialen Vorsprünge 26 und Anschläge 28 begrenzen die Amplitude von Drehschwingungen, die der Schwungring 20 gegenüber dem Tragkörper 10 unter Verformung der Segmente 24 ausführen kann.

An eine der beiden Mantelflächen 12 und 22, im dargestellen Beispiel an die äußere Mantelfläche 12, des Tragkörpers 10 sind ferner drei ebenfalls aus Gummi bestehende Halterungen 30 anvulkanisiert, die in der Mitte zwischen je zwei radialen Vorsprüngen 26 angeordnet sind. Jede der Halterungen 30 hat einen in radialer Richtung dicken Abschnitt 32, der gemäß Fig. 1 und 3 ein schwalbenschwanzförmiges Mittelstück ist. Der dicke Abschnitt 32 hat eine gleichachsig mit der Mantelfläche 22 des Schwungrings 20 gewölbte äußere Mantelfläche, die stirnseitig durch radial nach außen ragende Vorsprünge 33 begrenzt ist und in ihrer Mitte mindestens einen Schmiermittelraum aufweist; dargestellt ist ein halbkugelförmiger Schmiermittelraum 34. Ferner gehören zu jeder Halterung 30 zwei hakenförmige Widerlager 36. Zwischen dem dicken Abschnitt 32 und jedem der beiden Widerlager 36 hat jede Halterung 30 einen in radialer Richtung verhältnismäßig dünnen Abschnitt 37, der eine radial nach außen offene T-förmige Nut 38 gegen den Tragkörper 10 isoliert.

In jede der Halterungen 30 ist ein Gleitkörper 40 aus einem hartelastischen Werkstoff mit guten Gleiteigenschaften, beispielsweise PTFE, axial eingeschoben. Jeder der Gleitkörper 40 hat die Form einer Brücke mit einem Abschnitt 42 geringer radialer Dicke in Form eines Brückenbogens und zwei an dessen Enden angeordneten Abschnitten 44 größerer radialer Dicke in Form je einer Brückenstütze. Der Brückenbogen liegt radial innen spielfrei auf dem dicken Abschnitt 32 der Halterung 30 auf. Die radial äußere Seite des Brückenbogens bildet eine im dargestellten Beispiel radial nach außen gewölbte Gleitfläche 42'. Die Brückenstützen haben je ein gemäß Fig. 1, 3 und 4 asymmetrisches Schwalbenschwanzprofil mit einer Fußfläche 44', die sich im wesentlichen parallel zur benachbarten Einbuchtung 14 des Tragkörpers erstreckt. Zwischen der Fußfläche 44' und dem radial innerhalb von ihr angeordneten dünnen Abschnitt 37 der zugehörigen Halterung 30 ist gemäß Fig. 3 ein schmaler, in Umfangsrichtung langgestreckter radialer Zwischenraum 45 freigelassen, der sich nur dann schließt, wenn im Betrieb Radialkräfte, die eine vorgegebene Grenze überschreiten, über den Gleitkörper 40 vom Tragkörper 10 auf den Schwungring 20 übertragen werden.

Der als Brückenbogen gestaltete Abschnitt 42 weist in seiner Mitte einen radialen Schmiermittelkanal 46 auf, der den vom Brückenbogen überdecketen Schmiermittelraum 34 mit der Gleitfläche 42' verbindet, mit welcher der Gleitkörper 40 sich unter leichter radialer Vorspannung an der inneren Mantelfläche 22 des Schwungrings 20 abstützt. An den Schmiermittelkanal 46 können sich Schmiermittelnuten anschließen, über die ein im Schmiermittelraum 34 bereitgehaltenes Schmiermittel die gesamte Gleitfläche 42' erreicht. Die Vorsprünge 33 verhindern, daß Schmiermittel an den Stirnseiten des dicken Abschnitts 32 austritt.

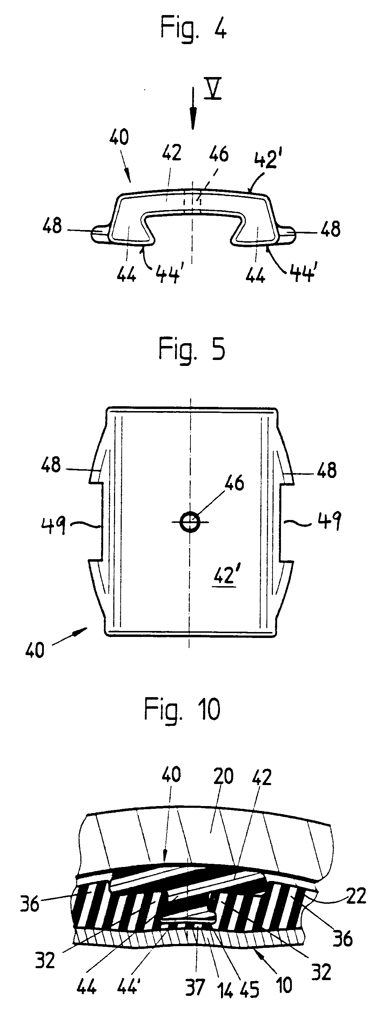

Die als Brückenstützen gestalteten Abschnitte 44 sind in je einer der T-förmigen Nuten 38 formschlüssig gehalten. Für den Fall, daß die radialen Vorsprünge 33 nicht ausreichen, um den Gleitkörper 40 in axialer Richtung zu sichern, kann, wie dargestellt, vom Fuß jeder der Brückenstützen ein seitlicher Vorsprung 48 in Umfangsrichtung derart nach außen ragen, daß er sich in einen Fußbereich des zugehörigen Widerlagers 36 eindrückt. Jeder der Füße 48 kann gemäß Fig. 5 eine Aussparung 49 aufweisen, in die ein komplementärer Vorsprung des zugehörigen Widerlagers 36 eingreift, so daß sich eine besonders zuverlässige Sicherung des Gleitkörpers 40 gegen unbeabsichtigte Verschiebung in axialer Richtung ergibt.

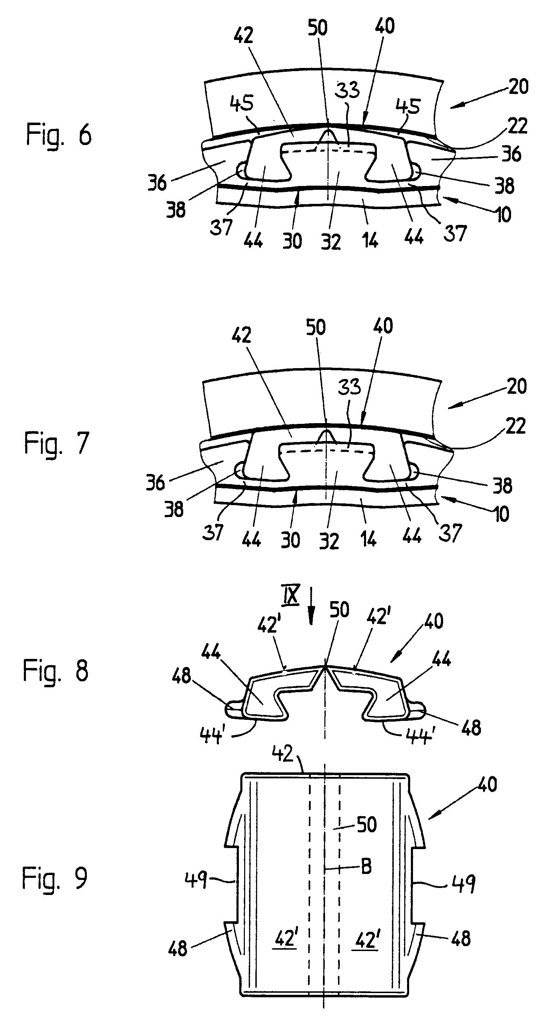

Die Ausführungsform gemäß Fig. 6 bis 9 unterscheidet sich von der in Fig. 1 bis 5 dargestellten dadurch, daß der als Brückenbogen gestaltete Abschnitt 42 jedes Gleitkörpers 40 in seiner Mitte eine Schwachstelle aufweist, die ein Gelenk 50 mit einer zur zentralen Achse des Drehschwingungstilgers parallelen Gelenkachse B bildet. Die Gleitfläche 42' des Gleitkörpers 40 hat im Bereich dieses Gelenks 50 normalerweise einen kleineren Krümmungsradius als die innere Mantelfläche 22 des Schwungrings 20. Infolgedessen bleibt zwischen den in Umfangsrichtung äußeren, im Bereich je eines der als Brückenstützen gestalteten Abschnitte 44 angeordneten Enden der Gleitfläche 42' und der inneren Mantelfläche 22 des Schwungrings 20 normalerweise ein schmaler Zwischenraum 45 frei, der sich nur dann schließt, wenn im Betrieb Radialkräfte oberhalb einer vorgegebenen Grenze auftreten. Die Fußflächen 44' der Brückenstützen stehen hingegen bei dem in Fig. 6 bis 9 dargestellten Ausführungsbeispiel in jedem Betriebszustand spielfrei auf dem zugehörigen, in radialer Richtung dünnen Abschnitt 37 der Halterung 30.

Die beiden in Fig. 1 bis 5 einerseits und in Fig. 6 bis 9 andererseits dargestellten Ausführungsformen können miteinander so kombiniert werden, daß radiale Zwischenräume 45 an den Enden der Gleitfläche 42' und an den beiden Fußflächen 44' jedes Gleitkörpers 40 freigelassen werden. In diesem Fall tritt ein Zustand, bei dem sämtliche Zwischenräume 45 überwunden sind, erst dann ein, wenn der dicke Abschnitt 32 der Halterung 30 entsprechend stärker als bei den gezeichneten Ausführungsbeispielen radial zusammengedrückt worden ist. Jeder der dargestellten brückenförmigen Gleitkörper 40 kann in zwei L-förmige Gleitkörper unterteilt sein, die zueinander symmetrisch angeordnet sein können.

Die Ausführungsform gemäß Fig. 10 unterscheidet sich von der in Fig. 1 bis 5 dargestellten darin, daß der Gleitkörper 40 im Querschnitt T-förmig ist und somit nur einen in radialer Richtung dicken Abschnitt 44 in Form einer Stütze aufweist, die den dicken Abschnitt 32 der zugehörigen Halterung 30 in zwei gleiche Hälften unterteilt.

## Patentansprüche

1. Drehschwingungstilger, insbesondere für den Antriebsstrang von Kraftfahrzeugen, mit
- einem Tragkörper (10), der rings um eine zentrale Achse eine äußere Mantelfläche (12) aufweist,
- einem Schwungring (20), der in radialem Abstand von der äußeren Mantelfläche (12) des Tragkörpers (10), gleichachsig mit diesem, eine innere Mantelfläche (22) aufweist,
- mehreren Segmenten (24) aus gummielastischem Material, die an den beiden Mantelflächen (12, 22) befestigt sind,
- mehreren Halterungen (30) aus gummielastischem Material, die an einer der beiden Mantelflächen (12) befestigt sind,
- mehreren Gleitkörpern (40), die durch je eine der Halterungen (30) an der einen Mantelfläche (12) befestigt sind und zur gleitenden Abstützung an der anderen Mantelfläche (22) je eine Gleitfläche (42') aufweisen, wobei
- die Gleitkörper (40) Abschnitte (42, 44) von unterschiedlicher radialer Dicke aufweisen, und
- mindestens ein Abschnitt (42) geringer radialer Dicke ständig auf einem in radialer Richtung dicken Abschnitt (32) der zugehörigen Halterung (30) abgestützt ist,
dadurch **gekennzeichnet**, daß mindestens ein Abschnitt (44) des Gleitkörpers (40) mit der größeren radialen Dicke einem in radialer Richtung dünneren Abschnitt (37) der zugehörigen Halterung (30) radial so gegenübersteht, daß am Ort dieser Abschnitte (44, 37), zwischen den Mantelflächen (12, 22) des Tragkörpers (10) und des Schwungrings (20) ein radialer Zwischenraum (45) freibleibt, der erst bei erhöhter radialer Belastung überwunden wird.

2. Drehschwingungstilger nach Anspruch 1,
dadurch **gekennzeichnet**, daß
- die Gleitkörper (40), in einer zur zentralen Achse parallelen Richtung betrachtet, brückenförmig gestaltet sind mit einem Brückenbogen, an dem die Gleitfläche (42') ausgebildet ist, und zwei Brückenstützen als Abschnitte (44) größerer radialer Dicke, die in je einer der Halterungen gehalten sind, wobei
- der Brückenbogen als Abschnitt (42) geringer radialer Dicke mindestens in einem mittleren Bereich im wesentlichen frei von Radialspiel zwischen einem Mittelstück (32) der zugehörigen Halterung (30) und der gegenüberliegenden Mantelfläche (22) angeordnet ist,
- die Brückenstützen und die ihnen benachbarten Teile der Halterung (30) hingegen so bemessen sind, daß der radiale Zwischenraum (45) zwischen der Halterung (30) und dem Gleitkörper (40) im Bereich jeder Brückenstütze angeordnet ist.

3. Drehschwingungstilger nach Anspruch 2,
dadurch **gekennzeichnet**, daß
der radiale Zwischenraum (45) zwischen je einer Fußfläche (44') der Brückenstützen und der zugehörigen Halterung (30) freigelassen ist.

4. Drehschwingungstilger nach Anspruch 1 oder 2,
dadurch **gekennzeichnet**, daß
der radiale Zwischenraum (45) zwischen je einem Ende der Gleitfläche (42') des Gleitkörpers (40) und der zugehörigen Mantelfläche (22) freigelassen ist.

5. Drehschwingungstilger nach Anspruch 4,
dadurch **gekennzeichnet**, daß
der Abschnitt (42) geringer radialer Dicke ein mittleres Gelenk (50) aufweist.

6. Drehschwingungstilger nach einem der Ansprüche 2 bis 5,
dadurch **gekennzeichnet**, daß
radial innerhalb jedes Brückenbogens mindestens ein Schmiermittelraum (34) angeordnet ist, an den sich ein im wesentlichen radial durch den Brückenbogen hindurch nach außen führender Schmiermittelkanal (46) anschließt.

7. Drehschwingungstilger nach einem der Ansprüche 2 bis 6,
dadurch **gekennzeichnet**, daß
die Brückenstützen im achsnormalen Querschnitt schwalbenschwanzförmig sind.

8. Drehschwingungstilger nach einem der Ansprüche 2 bis 7,
dadurch **gekennzeichnet**, daß
die Halterungen (30) je ein in Umfangsrichtung elastisch nachgiebiges Widerlager (36) aufweisen, an dem sich die zugehörige Brückenstütze abstützt.

9. Drehschwingungstilger nach Anspruch 1,
dadurch **gekennzeichnet**, daß
die Gleitkörper (40), in einer zur zentralen Achse parallelen Richtung betrachtet, L-förmig gestaltet sind.

10. Drehschwingungstilger nach Anspruch 1,
dadurch **gekennzeichnet**, daß
die Gleitkörper (40), in einer zur zentralen Achse parallelen Richtung betrachtet, T-förmig gestaltet sind.

## Claims

1. A torsional vibration damper, especially for the driving line of motor vehicles, comprising
- a carrier member (10) which has an outer shell surface (12) around a center axis,
- a rotating ring (20) which has an inner shell surface (22) radially spaced from the outer shell surface (12) of the carrier member (10) and disposed coaxially with the same,
- a plurality of segments (24) of rubber elastic material fastened to the two shell surfaces (12, 22),
- a plurality of retainers (30) of rubber elastic material fastened to one of the two shell surfaces (12),
- a plurality of slide elements (40) each fastened by a corresponding one of the retainers (30) to the one shell surface (12) and each having a slide surface (42') for sliding support on the other shell surface (22),
- the slide elements (40) including portions (42, 44) of different radial thickness, and
- at least one portion (42) of small radial thickness supported permanently on a portion (32) which is thick in radial direction of the corresponding retainer (30), **characterized** in that at least one portion (44) of the slide element (40) having the greater radial thickness is located radially opposite a portion (37) which is thinner in radial direction of the corresponding retainer (30) in such manner that a radial interval (45) remains free at the location of these portions (44, 37) between the shell surfaces (12, 22) of the carrier member (10) and the rotating ring (20), this interval being overcome only under increased radial load.

2. The torsional vibration damper as claimed in claim 1,
characterized in that
- the slide elements (40) are bridge shaped, as seen in a direction parallel to the center axis, having an arch which is formed with the sliding surface (42') and two trusses as portions (44) of greater radial thickness which are held in one of the retainers each,
- the arch, as the portion (42) of little radial thickness, being disposed substantially free of radial clearance, at least in a central region, between a middle piece (32) of the corresponding retainer (30) and the opposed shell surface (22),
- the bridge trusses and the adjacent parts of the retainer (30), on the other hand, being dimensioned such that the radial interval (45) between the retainer (30) and the slide element (40) is located in the area of each bridge truss.

3. The torsional vibration damper as claimed in claim 2, characterized in that the radial interval (45) is left free between a base area (44') each of the bridge trusses and the corresponding retainer (30).

4. The torsional vibration damper as claimed in claim 1 or 2, characterized in that the radial interval (45) is left free between an end each of the sliding surface (42') of the slide element (40) and the corresponding shell surface (22).

5. The torsional vibration damper as claimed in claim 4, characterized in that the portion (42) of little radial thickness includes a central joint (50).

6. The torsional vibration damper as claimed in any one of claims 2 to 5, characterized in that radially within each arch there is at least one lubricant chamber (34) to which is connected a lubricant passage (46) leading substantially radially through the arch to the outside.

7. The torsional vibration damper as claimed in any one of claims 2 to 6, characterized in that the bridge trusses are of dovetail shape in cross section perpendicular to the axis.

8. The torsional vibration damper as claimed in any one of claims 2 to 6, characterized in that the retainers (30) each comprise a thrust bearing (36) which is elastic in circumferential direction and on which the corresponding truss is supported.

9. The torsional vibration damper as claimed in claim 1, characterized in that the slide elements (40) are L shaped as seen in a direction parallel to the center axis.

10. The torsional vibration damper as claimed in claim 1, characterized in that the slide elements (40) are T shaped as seen in a direction parallel to the center axis.

## Revendications

1. Amortisseur d'oscillations rotatives, en particulier pour la lire d'entraînement de véhicules automobiles, comportant
- un corps-support (10) qui présente autour d'un axe central une surface enveloppe extérieure (12),
- un volant d'inertie (20) qui présente une surface enveloppe intérieure (22), à une distance radiale par rapport à la surface enveloppe extérieure (12) du corps-support (10) et de façon coaxiale à celui-ci,
- plusieurs segments (24) constitués en une matière élastique, qui sont fixés sur les deux surfaces enveloppes (12, 22),
- plusieurs fixations (30) constituées en une matière élastique qui sont fixées sur l'une des deux surfaces enveloppes (12),
- plusieurs corps coulissants (40) qui sont fixés chacun par l'une des fixations (30) sur ladite une surface enveloppe (12), et qui présentent chacun pour l'appui coulissant sur l'autre surface enveloppe (22) une surface coulissante (42'),
dans lequel
- les corps coulissants (40) présentent des tronçons (42, 44) d'une épaisseur radiale différente, et
- au moins un tronçon (42) d'une épaisseur radiale plus faible s'appuie constamment contre un tronçon (32) plus épais en direction radiale de la fixation (30) associée,
caractérisé en ce que
au moins un tronçon (44) du corps coulissant (40) se trouve radialement à l'opposé par son épaisseur radiale plus importante d'un tronçon (37) plus mince en direction radiale de la fixation (30) associée, de telle sorte qu'à l'endroit de ces tronçons (44, 37) il reste libre entre les surfaces enveloppes (12, 22) du corps-support (10) et du volant d'inertie (20) un espace intermédiaire radial (45), qui n'est annulé que lors d'une charge radiale accrue.

2. Amortisseur d'oscillations rotatives selon la revendication 1,
caractérisé en ce que
- les corps coulissants (40), vus en une direction parallèle à l'axe central, sont réalisés sous la forme d'un pont comportant une arche de pont sur laquelle est réalisée la surface coulissante (42'), et deux piles de pont réalisées sous la forme de tronçons (44) d'une épaisseur radiale plus importante, qui sont retenues chacune dans une des fixations,
dans lequel
- l'arche de pont réalisée sous la forme d'un tronçon (42) d'une épaisseur radiale plus faible est agencée au moins dans une région médiane sensiblement sans jeu radial entre un élément médian (32) de la fixation associée (30) et la surface enveloppe (22) située à l'opposé,
- les piles de pont et les pièces de la fixation (30) voisines de celles-ci sont cependant dimensionnées de telle sorte que l'espace intermédiaire radial (45) est agencé entre la fixation (30) et le corps coulissant (40) dans la région de chaque pile de pont.

3. Amortisseur d'oscillations rotatives selon la revendication 2,
caractérisé en ce que
l'espace intermédiaire radial (45) est laissé libre entre une surface de base (44') respective des piles de pont et la fixation associée (30).

4. Amortisseur d'oscillations rotatives selon l'une ou l'autre des revendications 1 et 2,
caractérisé en ce que
l'espace intermédiaire radial (45) est laissé libre entre une extrémité respective de la surface coulissante (42') du corps coulissant (40) et la surface enveloppe associée (22).

5. Amortisseur d'oscillations rotatives selon la revendication 4,
caractérisé en ce que
le tronçon (42) d'une épaisseur radiale plus faible présente une articulation médiane (50).

6. Amortisseur d'oscillations rotatives selon l'une quelconque des revendications 2 à 5,
caractérisé en ce que
radialement à l'intérieur de chaque arche de pont est agencé au moins une chambre de lubrifiant (34) à laquelle se raccorde un canal de lubrifiant (46) menant à l'extérieur sensiblement radialement à travers l'arche de pont.

7. Amortisseur d'oscillations rotatives selon l'une quelconque des revendications 2 à 6,
caractérisé en ce que les piles de pont présentent, en section perpendiculaire à l'axe, une forme de queue d'aronde.

8. Amortisseur d'oscillations rotatives selon l'une quelconque des revendications 2 à 7,
caractérisé en ce que
les fixations (30) présentent chacune un contrefort (36) flexible élastique en direction périphérique contre lequel s'appuie la pile de pont associée.

9. Amortisseur d'oscillations rotatives selon la revendication 1,
caractérisé en ce que
les corps coulissants (40), vus en une direction parallèle à l'axe central, sont réalisés sous une forme en L.

10. Amortisseur d'oscillations rotatives selon la revendication 1,
caractérisé en ce que
les corps coulissants (40), vus en une direction parallèle à l'axe central, sont réalisés sous une forme en T.
